Europäisches Patentamt

(19) European Patent Office

Office européen des brevets

(11) Publication number: **0 263 719 B1**

# EUROPEAN PATENT SPECIFICATION

(12)

(45) Date of publication of patent specification: **04.12.91**  (51) Int. Cl.⁵: **G01F 1/84**

(21) Application number: **87308967.6**

(22) Date of filing: **09.10.87**

Divisional application 90200728.5 filed on 27/03/90.

(54) Measuring mass flow rates of fluid flows.

(30) Priority: **10.10.86 US 917631**

(43) Date of publication of application:
**13.04.88 Bulletin 88/15**

(45) Publication of the grant of the patent:
**04.12.91 Bulletin 91/49**

(84) Designated Contracting States:
**DE ES FR GB IT SE**

(56) References cited:
**EP-A- 0 196 150**    **WO-A-86/00699**
**GB-A- 2 167 858**    **GB-A- 2 171 200**
**US-A- 3 927 565**    **US-A- 4 559 833**

(73) Proprietor: **INTERNATIONAL CONTROL AUTO-MATION FINANCE S.A.**
**16 Rue des Bains**
**Ville de Luxembourg(LU)**

(72) Inventor: **Mizerak, Dennis S.**
**4770 Locust Lane**
**Brunswick Ohio 44213(US)**

(74) Representative: **Cotter, Ivan John et al**
**D. YOUNG & CO. 10 Staple Inn**
**London WC1V 7RD(GB)**

## Description

This invention relates to measuring the mass flow rate of a fluid flow.

Devices are known which utilise the effect of angular motion on a moving fluid to directly measure mass flow. See for example, US Patent Nos. US-A-2 865 201 (Roth), US-A-3 355 944 and US-A-3 485 098 (Sipin).

US Patent No. US-A-4 109 524 (Smith discloses an apparatus and method for measuring mass flow rate through a conduit by reciprocating a section of the conduit to produce longitudinal angular rotation of that section. Linkages are connected to the section both for reciprocating it and for measuring a force exerted on the section, which force is due to an apparent force produced by mass flow through the conduit section. A direct measurement can thus be taken of the mass flow rate in this manner.

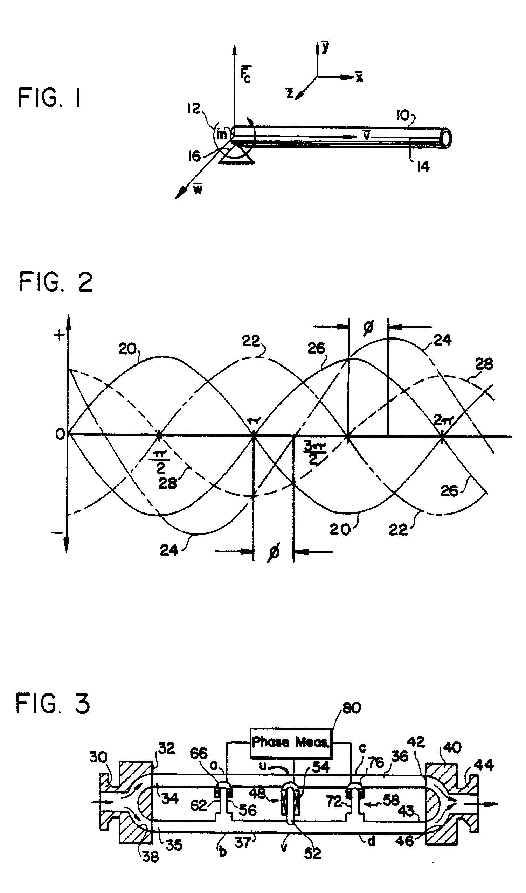

To understand how mass flow rate can be measured using the effects of this force, reference is now made to Figure 1 of the accompanying drawings which shows an arrangement of vectors on an X, Y, Z coordinate system.

When a moving mass m with a velocity vector $\bar{v}$ is acted upon by a force that causes angular velocity w about some axis, a force $F_c$ is observed, the force conforming to the relationship:

$$\bar{F}_c = 2m\bar{w} \times \bar{v}$$

If a flow tube of conduit for carrying a fluid, shown at 10 in Figure 1, is rotated in the $\bar{F}_c$ - $\bar{v}$ plane, in the clockwise direction shown by an arrow 12, this causes an angular velocity $\bar{w}$ as shown in Figure 1. If, however, rather than rotating the conduit 10 in the one direction shown by an arrow 12, the conduit is caused to oscillate back and forth about its pivot point, which is shown at 16, the magnitude and polarity of the angular velocity $\bar{w}$ will also oscillate and, therefore, the magnitude and polarity of the force $\bar{F}_c$ will oscillate proportionately.

For any point along the tube 10, for example a point 14, a displacement vector can be represented for small amplitudes as lying along the $\bar{Y}$-axis only. As the tube 10 is forced to oscillate by a sinusoidal driver about its pivot point 16 with very small amplitude, and with the point 14 far from the pivot point 16, then the magnitude of its displacement, velocity and acceleration vector can be represented by a graph shown in Figure 2 of the accompanying drawings. The displacement of the point 14 along the Y-axis is shown by a solid line 20. The velocity v of the point 14 is shown by a dash double dot line 22: this is in the units of, for example, m/s and represents dy/dt, that is the first derivative of displacement with respect to time.

The acceleration A is shown by a solid line 26 and represents the second derivative of displacement with respect to time, namely $d^2y/dt^2$, being in units of, for example, m/s². 

If there is a fluid flowing in the tube 10, a force $\bar{F}_c = 2m\bar{w} \times \bar{v}$, acting on the flowing mass, will also be developed. By Newton's third law, there will be developed an equal and an opposite force $-\bar{F}_c$ which acts on the tube 10 itself and is associated with an acceleration $\bar{A}'$, with $-\bar{F}_c$ and $\bar{A}'$ being directed along the $\bar{Y}$-axis. The magnitude of $\bar{A}'$ is shown by a dashed line 28. From the definition of the force $-\bar{F}_c$ set forth above, it can be seen that this force is proportional to the velocity of the point 14, which is 90° out of phase with the acceleration due to the driving force applied to the tube 10. The resultant force acting at the point 14 will be the sum of the driving force and the force $-\bar{F}_c$, with these two forces being 90° out of phase. A dot-dash line or curve 24 represents the sum associated with the accelerations $\bar{A}$ plus $\bar{A}'$, which is proportional to the sum of the driving force and the force $-\bar{F}_c$. A phase difference of $\phi$ between the original driving acceleration and the resultant summed acceleration will, therefore, be a direct measurement of the force $-\bar{F}_c$ which is directly proportional to the mass flow rate.

If the driving force is sinusoidal, then its displacement, velocity and acceleration will likewise be sinusoidal and vary by 90° and 180° respectively. This allows the phase difference $\phi$ to be equal regardless of whether it is measured relative to the displacement, velocity or acceleration functions of the drive force verses resultant drive force plus the force $-\bar{F}_c$.

UK Patent Application Publication No. GB-A-2 171 200 discloses apparatus, according to the pre-characterising part of claim 1 hereof, for measuring the mass flow rate of a fluid flow.

In the apparatus of GB-A-2 171 200, the flow dividing means is a Y-shaped tube connector whose outlets are connected directly to the conduits (measuring tubes) and the flow recombining means is a Y-shaped tube connector whose inlets are connected directly to the conduits. This results in a solid unit in which errors in measurement may arise due to axial stresses. This problem is said to be solved by exciting, not a sinusoidal oscillation, but a complex oscillation comprising a fundamental (sinusoidal) component having a harmonic superimposed thereon. A frequency determining circuit is used to determine values of resonance frequencies of the fundamental and harmonic oscillations to derive a correcting value which takes into account axial stresses in the straight parallel conduits to determine a corrected mass flow.

The present invention provides an apparatus for measuring the mass flow rate of a fluid flow, the apparatus comprising:

a pair of straight parallel conduits each having opposite ends, an axis and a mid-point between the opposite ends;

rigid support elements bonded to the adjacent ends of the straight parallel conduits to maintain the adjacent ends in fixed parallel relationship;

support means connected to the conduits at their opposite ends for holding the opposite ends of the conduits at substantially fixed positions, the support means comprising flow dividing means operative to divide a fluid flow, whose mass flow rate is to be measured, into two at least approximately equal parts, the flow dividing means including a pair of outlets each connected to a respective one of the straight parallel conduits at one of the opposite ends thereof, and flow recombining means having a pair of inlets each connected to a respective one of the straight parallel conduits at the other of the opposite ends thereof, the flow recombining means being operative to recombine said parts of the flow;

drive means associated with the conduits for inducing sinusoidal oscillation of the conduits towards and away from each other at a selected frequency in a direction transverse to their respective axes and substantially at their respective mid-points; and

at least one sensor for sensing motion of the conduits at a sensing point spaced from each mid-point and from the opposite ends of the conduits for sensing any phase difference of the selected frequency between the conduits;

characterised in that the outlets of the flow dividing means are connected to the straight parallel conduits via respective ones of a first pair of further conduits and the inlets of the flow recombining means are connected to the straight parallel conduits via respective ones of a second pair of further conduits, each of the further conduits being a flexible conduit formed in an at least approximately S-shaped configuration to absorb thermal stress whereby deformation or rupture of the straight parallel conduits due to temperature changes or temperature gradients is inhibited.

The straight parallel conduits and the at least one sensor are therefore isolated from the effects of a temperature change or temperature gradient between the conduits and the support means.

The invention may therefore be so embodied as to provide apparatus for measuring mass flow rate which is self-compensating for changes in temperature and thermal gradients, and which may be of high accuracy and resolution.

The at least one sensor may sense displacement, velocity or acceleration. A phase difference between the sensed motion and the driving motion is a measurement of mass flow rate for the fluid through the conduits.

In a preferred embodiment described below in detail, the drive means is provided in the middle of the conduits and between them, for applying lateral oscillations to the conduits which displace the conduits repeatedly away from and towards each other. This oscillation is permitted due to the flexibility of the conduits and since their ends are held at substantially fixed locations. Also, respective sensors are provided on either side of the drive means and roughly half way between the drive means and the respective ends of the straight parallel conduits. These sensors produce signals which correspond to the velocity of the tubes at the locations of the sensors. The two spaced apart conduits, each meant for carrying about one half of the flow, are, in use, forced to oscillate between fixed points in order to impart a reciprocating angular rotation to the conduits. With no fluid passing through the conduits, the frequency of oscillation for the drive means will exactly match and be in phase with the frequency of oscillations sensed by the two sensors. If a mass flow begins to pass through the conduits, however, all the sensors will continue to sense the same frequency as the driving frequency; the leading sensor in the direction of mass flow will lag the driving frequency with regard to its phase and the downstream sensor will lead the driving frequency, again with regard to phase. This phase lead and lag is directly usable as a measurement, which may be a continuous measurement, of mass flow rate through the conduits.

Apparatus in accordance with the invention for measuring mass flow rate may be so implemented as to be simple in design, rugged in construction and economical to manufacture.

The invention will now be further described, by way of illustrative and non-limiting example, with reference to the accompanying drawings, in which:

Figure 1 is a diagram showing a coordinate system in which a tube or conduit for carrying a mass flow of fluid can be rotated to illustrate the occurrence of a force $\overline{F}_c$;

Figure 2 is a graph showing various characteristics of motion and forces experienced at a certain point on the tube or conduit shown in Figure 1;

Figure 3 is a side elevational view of an apparatus for measuring the mass flow rate of a fluid flow, the apparatus being substantially as disclosed in our European Patent Application Publication No. EP-A-0 196 150;

Figure 4 is a schematic representation of the movement experienced by conduits of the apparatus;

Figure 5 is a diagram showning the maximum amplitude of an oscillating conduit;

Figure 6 is a graph of two sinusoidal curves which are of equal frequency but out of phase, showing a time difference $t_1$ between them; and

Figures 7 and 8 are, respectively, a plan view and a side elevational view of an apparatus embodying the invention.

Figure 3 shows an apparatus or device substantially as disclosed in EP-A-0 196 150 (cited above) which is used for measuring the mass flow rate of a fluid supplied to an inlet connection 30. The inlet connection 30 is connected to a first support or support structure 32 which fixes in position ends 34 and 35 of a pair of straight parallel conduits or tubes 36 and 37. A Y-shaped passage 38 is defined in the support 32 for dividing the mass flow into the connection 30 into two at least approximately equal parts. Thus, half the mass flow is supplied to the conduit 36 and the other half to the conduit 37.

The conduits 36 and 37 have opposite ends 42 and 43 respectively, which are connected to a second support or support structure 40 which carries an outlet connection 44. A Y-shaped passage 46 is defined in the support 40 for combining the flows of the conduits 36 and 37 back together and into the discharge connection 44.

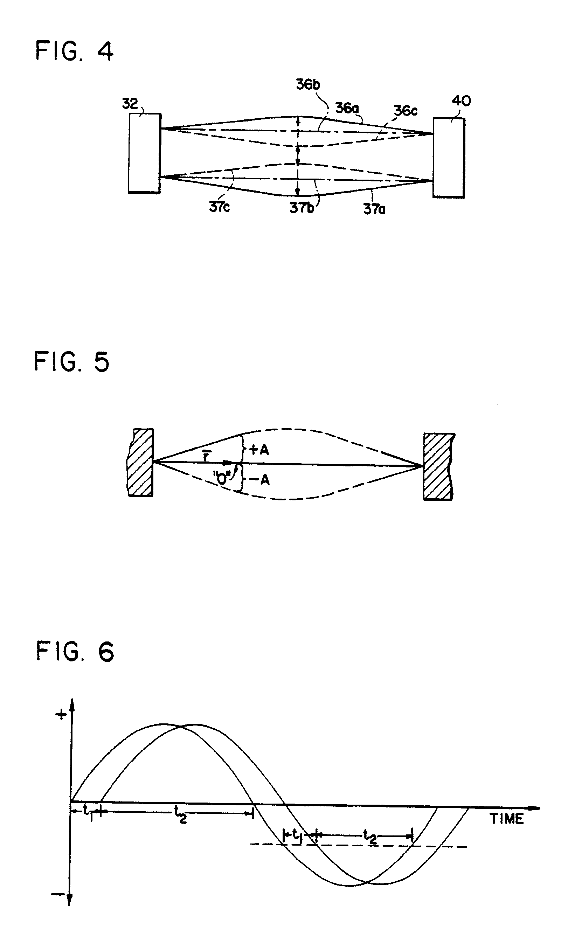

A driving mechanism or driver 48 is provided near the middle of and between the conduits 36 and 37. The driving mechanism 48 includes a solenoid coil 54 which is fixed, for example, to the conduit 36 (at a point "u"), and a permanent magnet 52 which rides in the coil 54 and is fixed to the conduit 37 (at a point "v"). By applying electricity to the coil 54 at a selected frequency, the conduits 36 and 37 can be made to oscillate towards and away from each other in an up and down direction. Figure 4, which is a schematic representation of the apparatus shown in Figure 3, shows the conduits 36 and 37 as lines. The maximum amplitude of the displacement that the conduits 36 and 37 achieve away from each other are shown by solid lines 36a and 37a. The maximum approach is shown by dotted lines 36c and 37c and the rest positions of the conduits 36 and 37 are shown by dot-dash lines 36b and 37b.

Referring again to Figure 3, the conduits 36 and 37 are provided with a pair of sensors 56 and 58 which are spaced apart from each other and positioned on opposite sides of the driving mechanism 48. The sensor 56 comprises a permanent magnet 62 which is magnetically coupled to a coil 66, the magnet and coil being connected to the conduits 37 and 36, respectively, (at points "b" and "a", respectively). In a similar fashion, the sensor 58 includes a permanent magnet 72 which rides in a coil 76, the magnet and coil being connected to the conduits 37 and 36, respectively (at points "d" and "c", respectively).

By oscillating the conduits 36 and 37 in the manner shown in Figure 4, sinusoidal currents are induced in the coils 66 and 76. These signals are proportional to the velocities of the conduits 36 and 37 towards and away from each other at the locations of the respective sensors 56 and 58.

When no fluid is passing through the conduits 36 and 37, the oscillation applied by the driving mechanism 48 to the mid-points of the conduits 36 and 37 will generate signals in the sensors 56 and 58 which are in phase with each other and in phase with the velocity of the driving mechanism 48. However, when fluid passes through the conduits 36 and 37, a phase difference appears between the signals of the sensors 56 and 58. The sensor 56 generates a velocity signal which lags behind the velocity of the driving mechanism 48 and the sensor 58 generates a signal which leads the velocity of the driving mechanism 48.

A phase measuring device 80 is connected to the sensors 56 and 58, as well as to the driving mechanism 48 or at least a power supply thereof, for measuring the phase lead and phase lag of the respective velocity signals. The phase lead and phase lag, relative to the velocity of the driving mechanism 48, is related directly to the mass flow rate of the fluid flowing through the conduits 36 and 37.

Figure 5 is a schematic illustration of one of the conduits 36 and 37. The position of one of the sensors 56 and 58 is shown at "o". This is at a point spaced by a distance r from the closest support for the conduit. At the point "o", the conduit executes an upward swing having a maximum amplitude of +A and a downward swing having a maximum amplitude of -A.

In the following analysis, displacement from the point "o" is designated by the letter y.

For any point on the flow tube, the displacement y of the tube from its rest position, while the tube is being forced to oscillate at resonance with a maximum amplitude A in simple harmonic motion, is given by:

$$y = A \sin wt$$

where

| | |
|---|---|
| y | = the displacement from the rest position; |
| A | = the maximum amplitude; |
| w | = $2\pi f$; |
| f | = the resonant frequency; and |
| t | = time (t = 0 when the oscillation begins). |

Since the tube is fixed at both ends and can only move transversely to its own rest axis, the displacement y is up and down. The velocity v of the point "o" up and down is then:

$$\bar{v} = dy/dt = wA \cos wt \quad (2)$$

and its acceleration a is then:

$$a = dv/dt = d^2y/dt^2 = -w^2 A \sin wt \qquad (3).$$

The force $-\bar{F}_c$ (a vector) acting on the point "o" will be up and down, like the induced oscillations, and will follow the relationship:

$$-\bar{F}_c = -2m_c \bar{w}_c \times \bar{V}_c \qquad (4)$$

where

$-\bar{F}_c$ = the apparent force resulting from the effect of the angular velocity on the moving fluid;

$m_c$ = the mass of fluid flowing past the point "o";

$\bar{w}_c$ = the angular velocity of the point "o", which equals $|\bar{V}/r|$ ($\bar{V} = \bar{w} \times \bar{r}$); and

$\bar{V}_c$ = the velocity of the fluid flowing past the point "o".

If k = the spring constant of the tube at the point "o", then the induced oscillating force amplitude is given by:

$$|\bar{F}| = -ky = -kA \sin wt \qquad (5).$$

Since the two forces act in the same directions, their magnitudes can be summed directly to give:

$$F - F_c = |\bar{F}| + |-\bar{F}_c| = (-2m_c V_c V/r) + (-kA \sin wt) - (6).$$

Substituting $V = wA \cos wt$ gives:

$$F - F_c = (-2m_c V_c/r) wA \cos wt - kA \sin wt \qquad (7).$$

Since $m_c, r, V_c, w, w^2$ and A are all constants for a constant mass flow rate, Equation (7) reduces to:

$$F - F_c = B1 \cos wt + B2 \sin wt \qquad (8)$$

where $B1 = -2wAm_cVc/r$
and $B2 = -kA$.

The sum $B1 \cos wt + B2 \sin wt$ shown in Equation (8) may be expressed as:

$$B1 \cos wt + B2 \sin wt = \gamma \sin (wt + \beta) \qquad (9)$$

where $\gamma = (B1^2 + B2^2)^{\frac{1}{2}}$
and $\beta = \arctan (B1/B2)$.

Equation (9) mathematically shows that the resultant force on the point "o" is at the same frequency as both the driving resonant oscillations, $B1 \cos wt$ and $B2 \sin wt$, but is out of phase by an amount $\beta$, where:

$$\beta = \arctan (B1/B2) = \arctan (-2wAm_cV_c/-kAr) \quad -$$

(10)

or:

$$\beta = \arctan (2wm_cV_c/kr) \qquad (11).$$

Since $w = 2\pi f$, where f = the frequency of oscillations, which is held constant at the natural resonant frequency of the tube, r is a fixed distance and k is a constant, then

$$\beta = \arctan (m_cV_c/\alpha) \qquad (12)$$

where $\alpha = (kr/4\pi f)$.

Therefore:

$$m_cV_c = \alpha \tan (\beta) \qquad (13)$$

where $m_cV_c$ = the mass flow rate.

Thus, the force acting on the point "o" is sinusoidal and at the same frequency as the driving force and only differs by a phase change $\beta$. The displacement, velocity or acceleration functions (as well as any higher derivatives of these) also differ in phase from the corresponding drive force by the same amount:

$$\beta \pm n\pi/2 \qquad (14)$$

where n is an integer.

For very small phase shifts, Equation (12) becomes

$$\beta = \arctan (m_cV_c/\alpha) \approx m_cV_c/\alpha$$

$$= m_cV_c(4\pi f/kr) \qquad (15).$$

In order to eliminate the frequency dependent term f, it is necessary to examine the two signals, which differ only in phase $\phi$, as they are represented in terms of amplitude against time in Figure 6.

The frequencies of the signals are equal and their period T is given by:

$$T = 1/f \qquad (16).$$

The period can also be expressed as:

$$T = 2 (t_1 + t_2) \qquad (17)$$

where $t_1$ = the time difference between the signals, and

$t_2 = T/2 - t_1$.

The relative phase angle $\beta$ of the signals can then

be defined as:

$$\beta = \pi t_1 / (t_1 + t_2) = 2\pi t_1 f \qquad (18).$$

Equations (18) and (15) yield:

$$\beta = m_c V_c (4\pi f/kr) = 2\pi t_1 f \qquad (19)$$

and, therefore:

$$m_c V_c = \text{mass flow rate} = (kr/2) t_1 \qquad (20)$$

which eliminates the frequency dependency and requires only that the spring constant k, length r and time interval $t_1$ be known. The time interval $t_1$ can be measured using an oscilloscope and standard laboratory techniques.

For any set of conditions, k and r will be constants, and, therefore, a measurement of $t_1$ will be directly proportional to the mass flow rate. It is obvious that $t_1$ can be measured along any line through the signals as shown in Figure 6 and is not restricted to the "zero crossing" base line. The line difference $t_1$ can be measured between any two points equal first and second derivatives during any one cycle of the two signals regardless of gain or DC offset factors.

In the present design, the point "a" on the split parallel conduit arrangement of Figure 3 will follow the above progression. The mass flow rate can be directly measured by measuring the time difference $t_1$ between the induced signal at the point "u" and the mass flow rate effected signal at the point "a". With flow as shown in Figure 3, the point "a" will lag the point "u". Likewise, the point "b" will lag the point "v", the point "c" will lead the point "u" and the point "d" will lead the point "v". )The phase angle amplitude will be equal between all these respective points with leading points positive and lagging point negative). Therefore, the total phase difference $\phi$ between the lag at the points "a" and "b" and the lead at the points "c" and "d" will provide a signal sampling the total direct mass flow rate through both the conduits 36 and 37 twice, as a weighted average. The sum of the lead and lag phase angles will, therefore, cancel and provide the resonant frequency data necessary to maintain the tubes at their natural resonant frequency regardless of pressure, density or temperature variations.

The split parallel conduit arrangement of Figure 3 also allows both halves of the drive coil 48 and both of the sensor coils 66, 76 to be mounted to the flow conduits 36, 37 directly and help reduce common mode vibration noise and improve performance (provided that the sprung masses at the points "a", "b", "c" and "d" are all equal, and at the points "u" and "v" are equal).

Thus, advantages of the split parallel conduit approach of Figure 3 are as follows. Direct mass flow rate measurement proportional to the time measurement between points with equal first and second derivatives during any one cycle of two equal frequency signals; simple, rugged mechanical design; easy of assembly; small overall size; ease of installation; process fluid density insensitive; only slight temperature dependency; ease of scaling up and down in size; process fluid viscosity insensitive; and applicable to liquids, gases and slurries.

In the alternative, phase measuring devices, such as that shown in Figure 3 at 80, are known. An example is the Hewlett Packard Model 3575A. The phase difference from the driving point to the sensing point near the centre of the tubes, and the sensing point, spaced away from the centre, can thus be utilised as a measurement of mass flow rate. Sensors, as provided on both sides of the driving mechanism, increase accuracy.

While the apparatus shown in Figure 3 will, under ordinary conditions, give an accurate measurement of mass flow, a change in temperature or thermal gradient between the straight parallel conduits 36, 37 and their supports 32, 40 may result in the conduits being subject to high stress leading to performance degradation or possibly, in the extreme, to failure of the conduits.

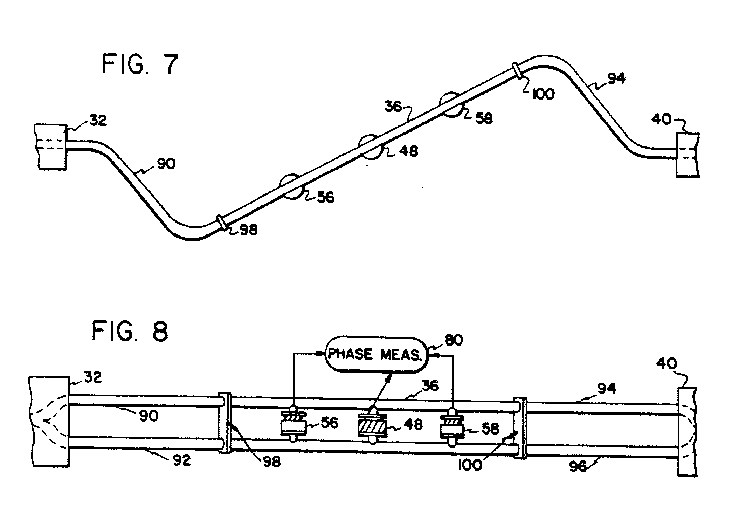

Figures 7 and 8 show a modified version of the apparatus of Figure 3, which modification constitutes an embodiment of this invention, wherein the straight parallel conduits 36, 37 and the associated sensors 56, 58 and driving mechanism are isolated from the effects of such temperature changes and thermal gradients. As shown in Figures 7 and 8, the straight conduits 36, 37 are connected to the support 32 through flexible, S-shaped conduits 90 and 92, respectively. Similarly, the conduits 36, 37 are connected to the support 40 through flexible, S-shaped conduits 94 and 96, respectively. Rapid support plates 98, 100 firmly bonded to the straight conduits 36, 37 accurately define their effective lengths and hold them in precise parallel relationship when in the rest positions shown in Figure 4 by the dot-dash lines 36b and 37b.

## Claims

1. Apparatus for measuring the mass flow rate of a fluid flow, the apparatus comprising:

a pair of straight parallel conduits (36, 37) each having opposite ends, an axis and a midpoint between the opposite ends;

rigid support elements (98, 100) bonded to the adjacent ends of the straight parallel conduits (36, 37) to maintain the adjacent ends in fixed parallel relationship;

support means (32, 40) connected to the conduits (36, 37) at their opposite ends for holding the opposite ends of the conduits at substantially fixed positions, the support means comprising flow dividing means (32) operative to divide a fluid flow, whose mass flow rate is to be measured, into two at least approximately equal parts, the flow dividing means (32) including a pair of outlets each connected to a respective one of the straight parallel conduits (36, 37) at one of the opposite ends thereof, and flow recombining means (40) having a pair of inlets each connected to a respective one of the straight parallel conduits at the other of the opposite ends thereof, the flow recombining means (40) being operative to recombine said parts of the flow;

drive means (48) associated with the conduits (36, 37) for inducing sinusoidal oscillation of the conduits towards and away from each other at a selected frequency in a direction transverse to their respective axes and substantially at their respective mid-points; and

at least one sensor (56, 58) for sensing motion of the conduits (36, 37) at a sensing point spaced from each mid-point and from the opposite ends of the conduits for sensing any phase difference of the selected frequency between the conduits;

characterised in that the outlets of the flow dividing means (32) are connected to the straight parallel conduits (36, 37) via respective ones of a first pair of further conduits (90, 92) and the inlets of the flow recombining means (40) are connected to the straight parallel conduits (36, 37) via respective ones of a second pair of further conduits (94, 96), each of the further conduits (90, 92, 94, 96) being a flexible conduit formed in an at least approximately S-shaped configuration to absorb thermal stress whereby deformation or rupture of the straight parallel conduits due to temperature changes or temperature gradients is inhibited.

2. Apparatus according to claim 1, wherein the two at least approximately S-shaped flexible conduits making up each pair (90/92, 94/96) thereof are parallel to one another.

3. Apparatus according to claim 1 or claim 2, wherein each of the flexible conduits (90, 92, 94, 96) is so configured that it appears at least approximately S-shaped when viewed in a direction that is perpendicular to and passes through the axes of both the straight parallel conduits (36, 37).

**Revendications**

1. Appareil pour mesurer le débit massique d'un écoulement de fluide, l'appareil comprenant :

une paire de conduits parallèles droits (36, 37) comportant chacun des extrémités opposées, un axe et un point central entre les extrémités opposées;

des éléments de support rigides (98, 100) liés aux extrémités adjacentes des conduits parallèles droits (36, 37) afin de maintenir les extrémités adjacentes en relation parallèle fixe;

un moyen de support (32, 40) relié aux conduits (36, 37) à leurs extrémités opposées pour maintenir les extrémités opposées des conduits à des positions substantiellement fixes, le moyen de support comprenant un moyen de division d'écoulement (32) servant à diviser un écoulement de fluide, dont le débit massique doit être mesuré, en au moins deux parties à peu près égales, le moyen de division d'écoulement (32) comprenant une paire de sorties reliées chacune à un conduit respectif des conduits parallèles droits (36, 37) à une de leurs extrémités opposées, et un moyen de recombinaison d'écoulement (40) comportant une paire d'entrées reliées chacune à un conduit respectif des conduits parallèles droits à l'autre de leurs extrémités opposées, le moyen de recombinaison d'écoulement (40) servant à recombiner lesdites parties de l'écoulement;

un moyen d'entraînement (48) associé aux conduits (36, 37) pour induire une oscillation sinusoïdale des conduits par rapprochement et éloignement les uns des autres à une fréquence sélectionnée dans une direction transversale à leurs axes respectifs et substantiellement à leurs points centraux respectifs; et

au moins un capteur (56, 58) pour détecter le mouvement des conduits (36, 37) à un point de détection espacé de chaque point central et des extrémités opposées des conduits pour détecter toute différence de phase de la fréquence sélectionnée entre les conduits;

caractérisé en ce que les sorties du moyen de division d'écoulement (32) sont reliées aux conduits parallèles droits (36, 37) via des conduits respectifs d'une première paire de conduits supplémentaires (90, 92) et les entrées du moyen de recombinaison d'écoulement (40) sont reliées aux conduits parallèles droits (36, 37) via des conduits respectifs d'une seconde paire de conduits supplémentaires (94, 96), chacun des conduits supplémentaires (90, 92, 94, 96) étant un conduit flexible en une configuration au moins approximativement en forme de S pour absorber la contrainte thermique de manière que la déformation ou rupture des conduits parallèles droits due à des changements de température ou gradients de température soit empêchée.

2. Appareil selon la revendication 1, dans lequel les au moins deux conduits flexibles approximativement en forme de S composant chaque paire (90/92, 94/96) sont parallèles.

3. Appareil selon la revendication 1 ou 2, dans lequel chacun des conduits flexibles (90, 92, 94, 96) est configuré de manière à présenter approximativement la forme d'un S lorsqu'il est vu dans une direction qui est perpendiculaire aux axes des deux conduits parallèles droits (36, 37) et les traversent.

**Patentansprüche**

1. Vorrichtung zur Messung der Massendurchflußrate eines Flüssigkeitsstromes mit

einem Paar gerader paralleler Leitungen (36, 37), von denen jede einander entgegengesetzte Enden, eine Achse und einen Mittelpunkt zwischen den einander entgegengesetzten Enden hat,

starren Stützelementen (98, 100), die mit den benachbarten Enden der geraden parallelen Leitungen (36, 37) verbunden sind, um die benachbarten Enden in einer ortsfesten parallelen Beziehung zu halten,

Stützeinrichtungen (32, 40), die mit den Leitungen (36, 37) an ihren entgegengesetzten Enden verbunden sind, um die entgegengesetzten Enden der Leitungen in im wesentlichen ortsfesten Positionen zu halten, wobei die Stützeinrichtungen Strömungsteilungseinrichtungen (32) besitzen, die einen Flüssigkeitsstrom, dessen Massendurchflußrate gemessen werden soll, in zwei wenigstens etwa gleiche Teile teilt, die Strömungsteilungseinrichtungen (32) ein Paar von Auslässen enthalten, von denen jeder mit einer der geraden parallelen Leitungen (36, 37) an einem der entgegengesetzten Enden derselben verbunden ist, und Strömungswiedervereinigungseinrichtungen (40) ein Paar Einlässe haben, von denen jeder mit einer der geraden parallelen Leitungen an dem anderen der entgegengesetzten Enden derselben verbunden ist, wobei die Strömungswiedervereinigungseinrichtungen (40) so arbeiten, daß sie die Teile des Stromes wieder vereinigen,

Antriebseinrichtungen (48), die den Leitungen (36, 37) zugeordnet sind, um eine sinuskurvenartige Oszillation der Leitungen zueinander hin und voneinander weg mit einer gewählten Frequenz in einer Richtung quer zu ihren betreffenden Achsen und im wesentlichen an ihren betreffenden Mittelpunkten zu erzeugen, und

wenigstens einem Sensor (56, 58) zum Abfühlen der Bewegung der Leitungen (36, 37) an einem Abfühlpunkt, der von dem jeweiligen Mittelpunkt und von den entgegengesetzten Enden der Leitungen einen Abstand hat, um einen Phasenunterschied der gewählten Frequenz zwischen den Leitungen abzufühlen,

**dadurch gekennzeichnet,** daß die Auslässe der Strömungsteilungseinrichtungen (32) mit den geraden parallelen Leitungen (36, 37) über jeweils eine eines ersten Paares weiterer Leitungen (90, 92) verbunden sind und die Einlässe der Strömungswiedervereinigungseinrichtungen (40) mit den geraden parallelen Leitungen (36, 37) über jeweils eine eines zweiten Paares weiterer Leitungen (94, 96) verbunden sind, wobei jede der weiteren Leitungen (90, 92, 94, 96) eine flexible Leitung ist, die in einer wenigstens etwa S-förmigen Gestaltung ausgebildet ist, um eine Wärmespannung zu absorbieren, wodurch eine Verformung oder ein Bruch der geraden parallelen Leitungen infolge von Temperaturveränderungen oder Temperaturgefällen verhindert werden.

2. Vorrichtung nach Anspruch 1, bei der die zwei wenigstens etwa S-förmigen flexiblen Leitungen, die jeweils ein Paar (90/92, 94/96) bilden, parallel zueinander sind.

3. Vorrichtung nach Anspruch 1 oder Anspruch 2, bei der jede der flexiblen Leitungen (90, 92, 94, 96) derart gestaltet ist, daß sie wenigstens etwa S-förmig erscheint, wenn man in einer Richtung blickt, die senkrecht zu den Achsen beider der geraden parallelen Leitungen (36, 37) ist und durch diese hindurchgeht.

FIG. 1

FIG. 2

FIG. 3

Phase Meas.

# FIG. 4

# FIG. 5

# FIG. 6

FIG. 7

FIG. 8

PHASE MEAS.